# EUROPEAN PATENT APPLICATION

(11) **EP 2 839 905 A1**
(43) Date of publication of application: **25.02.2015**
(21) Application number: 13004142.9
(22) Date of filing: 22.08.2013
(51) Int. Cl.: B22F 3/105, F02K 9/97

(54) **Manufacturing of components from parts made from different materials, particularly of space transportation components such as combustion chambers for thrusters**

(71) Applicant: Astrium GmbH, 82024 Taufkirchen (DE)
(72) Inventor: Beyer, Steffen, D-81827 München (DE); Sebald, Torsten, D-85614 Kirchseeon (DE)

(57) **Abstract**

The invention relates to a method for manufacturing of components (10) from parts (12, 14, 16) made from different materials, wherein a transition between one part (14) made from a first material and another part (16) made from a second material is produced by an additive layer manufacturing method, and wherein the additive layer manufacturing method comprises starting with the first material and then gradually changing the material composition to the second material.

## Description

### TECHNICAL FIELD

The invention relates to manufacturing of components made from different materials, particularly of space transportation components such as combustion chambers for thrusters

### BACKGROUND

In space transportation, components such as combustion chambers for (satellite) thrusters often require a combination of several parts made from different materials in order to fulfil different operational requirements. These operational requirements can be for example high-temperature strength, heat conductivity, coefficient of thermal expansion requirements or design strength requirements such as welding and cooling requirements.

The parts made from different materials like different noble metal systems of a component can be combined by welding processes. However, a welding process can lead to a degradation of the properties of the materials of the combined parts resulting in a weak point of the component at the welded connection.

Further weak points are "hard" interfaces of parts with differences in the material properties. Weak points influence the reliability of components combined from several parts.

Parts made from Functionally Graded Material (FGM) can be designed with different_material properties of the thruster chamber inner layer (hot gas wall) to resist corrosion and erosion. Outer layer designed to have higher heat conductivity.

### SUMMARY OF INVENTION

It is an object of the present invention to provide a method for manufacturing components from parts made from different materials, particularly of space transportation components such as combustion chambers for thrusters, with which the influence of weak points on the is reduced.

This object is achieved by the subject matter of the independent claims. Further embodiments are shown by the dependent claims.

An idea underlying the present invention consists in producing graded material transitions between parts made from different materials in order to avoid weak points caused by "hard" interfaces. For producing such graded material transitions, the invention proposes to apply an additive layer manufacturing (ALM) method. The ALM method allows producing transitions with a gradually changing material composition of the two materials of the parts to be combined with the transition. In contrast to other transition production methods such as welding, ALM methods allow a better controlling of the gradually change of the material composition, and, thus, to reduce the risk of material property degradation and flaw formation for example of porosity or hot cracking, which could be caused by a welding process. Furthermore, the production of transitions with gradually changing material compositions can avoid or at least reduce interface stresses, which can originate from high local differences of material properties of two parts. Finally, the application of an ALM method for producing a transition between two parts can be performed by using only one working step instead of numerous alternating welding and machining steps.

An embodiment of the invention relates to a method for manufacturing of components from parts made from different materials, wherein a transition between one part made from a first material and another part made from a second material is produced by an ALM method, and wherein the ALM method comprises starting with the first material and then gradually changing the material composition to the second material.

The additive layer manufacturing can use a powder bed, a powder feeding, or a wire feeding for making the transition between the one part to the another part.

The ALM method can use at least two individual powder feeders, wherein one powder feeder is provided for producing layers of the first material and another powder feeder is provided for producing layers of the second material.

The powder feeders may use a Laser or an Electron Beam as energy source.

The gradually changing of the material composition from the first material to the second material may comprise starting with a deposition of the first material by means of a powder feeding of the first material, then gradually decreasing of the powder feeding of the first material and at the same time gradually increasing of a powder feeding of the second material, and ending with an isolated deposition layer of the second material.

Alternatively, the gradually changing of the material composition from the first material to the second material may comprise starting with a deposition of the first material by means of a wire feeding of the first material, then gradually decreasing of the wire feeding of the first material and at the same time gradually increasing of a wire feeding of the second material, and ending with an isolated deposition layer of the second material.

Further alternatively, the gradually changing of the material composition from the first material to the second material may comprise creating a powder bed of a pre-mix of the first and the second material with a material composition gradually changing from the first to the second material, and selectively melting the entire created powder bed with a point heat source.

The method according to the invention may be used for manufacturing of space transportation components, particularly combustion chambers for thrusters.

A further embodiment of the invention relates to a device for manufacturing of components from parts made from different materials comprising ALM means provided for producing a transition between one part made from a first material and another part made from a second material, wherein the ALM means are provided to produce the transition with a gradually changing material composition starting with the first material to the second material.

The ALM means may comprise at least two individual powder feeders, wherein one powder feeder is provided for producing layers of the first material and another powder feeder is provided for producing layers of the second material.

The powder feeders may use a Laser or an Electron Beam as energy source.

The ALM means may be provided to produce the transition with a gradually changing material composition starting with the first material to the second material by performing the acts of starting with a deposition of the first material by means of a powder feeding of the first material, then gradually decreasing of the powder feeding of the first material and at the same time gradually increasing of a powder feeding of the second material, and ending with an isolated deposition layer of the second material.

Alternatively, the ALM means may be provided to produce the transition with a gradually changing material composition starting with the first material to the second material by performing the acts of starting with a deposition of the first material by means of a wire feeding of the first material, then gradually decreasing of the wire feeding of the first material and at the same time gradually increasing of a wire feeding of the second material, and ending with an isolated deposition layer of the second material.

Further alternatively, the ALM means may be provided to produce the transition with a gradually changing material composition starting with the first material to the second material by performing the acts of creating a powder bed of a pre-mix of the first and the second material with a material composition gradually changing from the first to the second material, and selectively melting the entire created powder bed with a point heat source.

The device according to the invention may be provided for manufacturing of space transportation components, particularly combustion chambers for thrusters.

A yet further embodiment of the invention relates to a space transportation component, particularly a combustion chamber for a thruster, being produced with a method and/or a device of the invention and as described herein and comprising two or more parts made from different materials, wherein each part has at least one transition to another part.

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

Fig. 1 shows an overview of the three different ALM processes usable for the manufacturing of components from parts made from different materials according to the invention;
Fig. 2 shows a first embodiment of an orbital satellite thruster consisting of several parts made from different noble metals and combined with a method according to the present invention;
Fig. 3 shows a second embodiment of an orbital satellite thruster consisting of several parts made from different noble metals and combined with a method according to the present invention; and
Fig. 4 shows an embodiment of an ALM device for manufacturing of components from parts made from different materials according to the present invention.

### DESCRIPTION OF EMBODIMENTS

In the following, functionally similar or identical elements may have the same reference numerals. Absolute values are shown below by way of example only and should not be construed as limiting the invention.

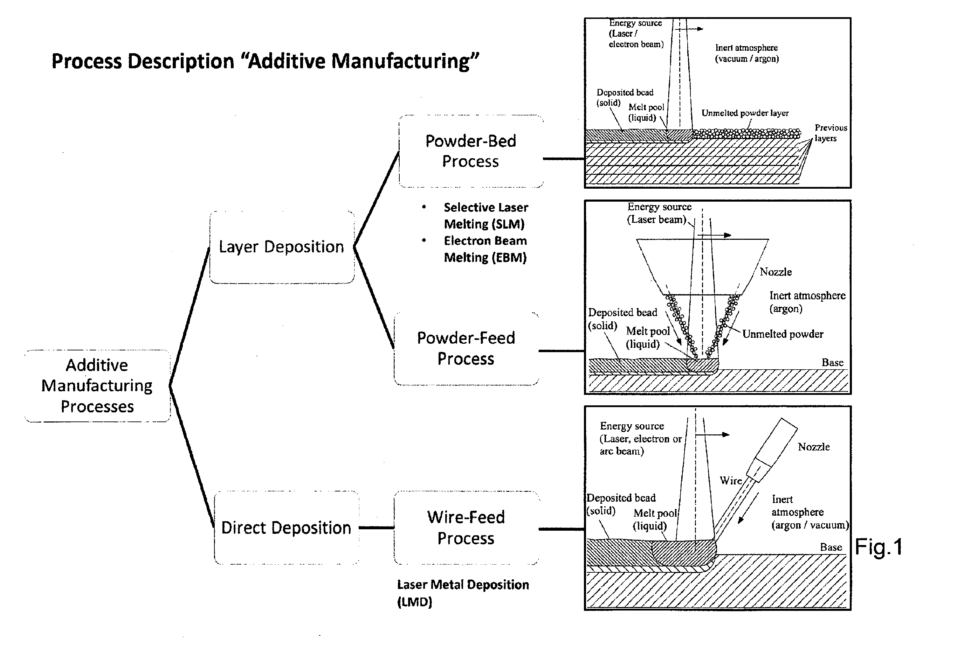

Fig. 1 shows an overview of the different ALM processes for making transitions between parts made from different materials in order to manufacture a component from these parts such as a thruster. Generally, the invention uses an additive manufacturing process or ALM to make a transition between two parts made from different materials. For making transitions, either a layer deposition process or a direct deposition process can be used.

As layer deposition process, a powder bed process or a powder feed process can be applied. The powder bed process can use selective laser melting (SLM) or electron beam melting (EBM) for heating and melting a prepared powder bed, which consists of several layers of different material powders. With SLM or EBM the powder bed is selectively melted for making a solid transition by drivinig a laser or electron beam as energy source over the powder bed until a solid deposited bead is made in the transition. The powder bed process is performed in an inert atmopshere, such as in a vacuum or under argon gas. With the powder bed process, a transition is typically made layer by layer, i.e. each layer of powder material is deposited on the solid previous layers and after deposition selectively melted by means of a laser or electron beam. The powder feed process directly feeds unmelted powder materials via a nozzle to a base of the transition, where the deposited poweder material mix is immediately melted in a liquid melt pool by means of a laser beam through the feed nozzle. The nozzle and the laser beam are synchronously driven over the base of the transition in order to fill the transition with a solid deposited bead. The powder feed process is performed also in an inert atmosphere such as under argon gas.

As direct deposition process, a wire feed process can be applied. The wire feed process can use laser metal deposition (LMD) for creating the transition. The material composition is feed as wire from a nozzle to the transition and deposited on a base of the transition. During the deposition, a liquid melt pool is selectively generated by means of a laser, electron, or arc beam as energy source. The beam is driven over the base of the transition synchronous with the deposition of the wire feed by the nozzle in order to fill the transition with a solid deposited bead.

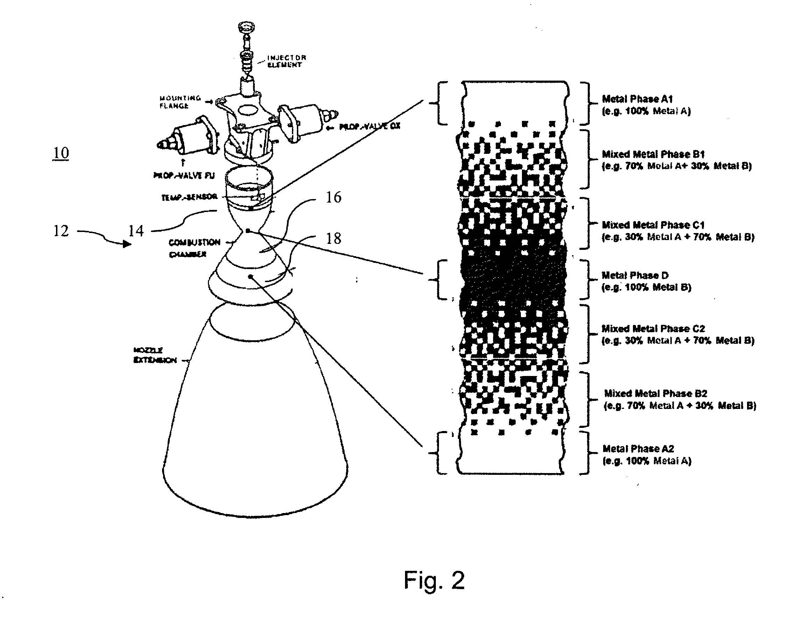

Fig. 2 shows a first embodiment of an orbital satellite thruster 10 with a combustion chamber 12 manufactured from a first part 14 made from 100% of a metal A (metal phase A1), a second middle part 16 made from 100% of metal B (metal phase D), and a third part 18 made from 100% of metal A (metal phase A2). Metals A and B may be noble metals.

The transitions between the first and seconds parts 14 and 16, respectively, and between the second and third parts 16 and 18, respectively, are each produced by an ALM method.

The production of the transitions by the ALM method comprises starting with the material of one part and then gradually changing the material composition to the material of the other part.

For example, for producing the transition between the parts 14 and 16, the ALM method may start with 100% of metal A and then gradually changing the material composition between metal A and metal B to 100% of metal B. The resulting transition has a material composition as shown in Fig. 1 in the right diagram: from part 14 made from 100% of metal A the transition changes its material composition to a mixed metal phase B1, for example 70% of metal A and 30% of metal B, and then to a mixed metal phase C1, for example 30% of metal A and 70% of metal B, until part 16 made from 100% of metal B. Similarly, the transition between parts 16 and 18 can be produced with the ALM method: starting with 100% of metal B of part 16, changing the material composition to a mixed metal phase C2, for example 30% of metal A and 70% of metal B, and then to a mixed metal phase B2, for example 70% of metal A and 30% of metal B, until part 18 made from 100% of metal A.

The transitions can be produced with a device comprising powder feeders with powder sources for powder of metal A and powder of metal B. Means of the device control the powder supplied with the powder feeders for creating a transition and energy sources such as an electron beam or a laser for heating of the powder mixture in order to create a stable and reliable transition. Instead of powder feeders, wire feeders can be applied to supply metal A and metal B as feed wires in order to create the transition. It is also possible to use a powder bed of a pre-mix of both metals A and B with a composition of both metals A and B gradually changing from metal A to B and/or vice versa. The powder bed can be prepared in the transition between both parts and selectively melted with a point heat source such as a laser or electron beam.

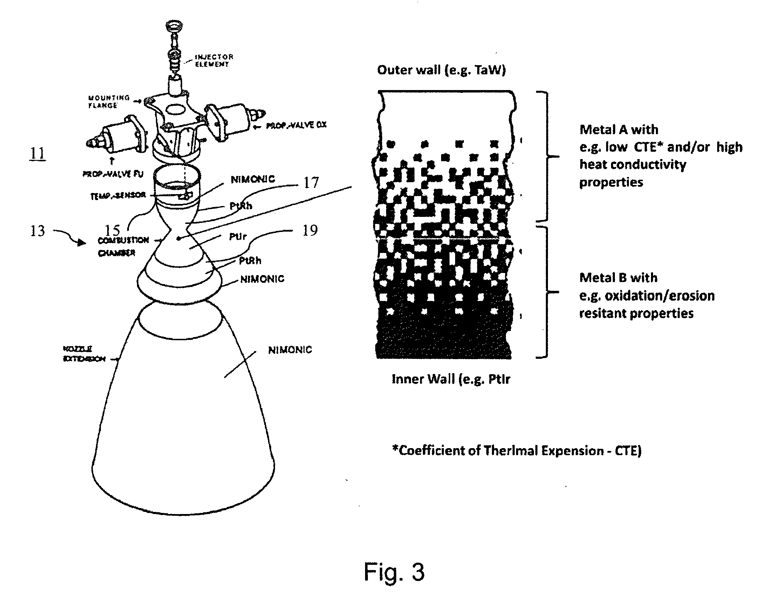

Fig. 3 shows a second embodiment of an orbital satellite thruster 11 with a combustion chamber 13 manufactured from a first part 15 made from NIMONIC®, a second middle part 17 made from a PtRh (platinum rhodium) alloy and a Ptlr (platinum Iridium) alloy, and a third part 19 made from a PtRh alloy.

The transitions between the first and seconds parts 15 and 17, respectively, and between the second and third parts 17 and 19, respectively, are each produced by an ALM method. As shown on the right hand in Fig. 3, the transition is made with a grading from the inside to the outside of the thruster wall. The material of the inner side of the thruster wall at the transition (inner wall) consists of about 100% Ptlr alloy (metal B with for example oxidation/erosion resistant properties), while the material of the outer side of thruster wall at the transition (outer wall) consists of about 100% TaW (tantalum) alloy (metal A with for example a low CTE (coefficient of thermal expansion) and/or high heat conductivity properties). The transition gradually changes due to the ALM manufacturing process from about 100% Ptlr alloy at the inner wall to about 100% TaW alloy at the outer wall.

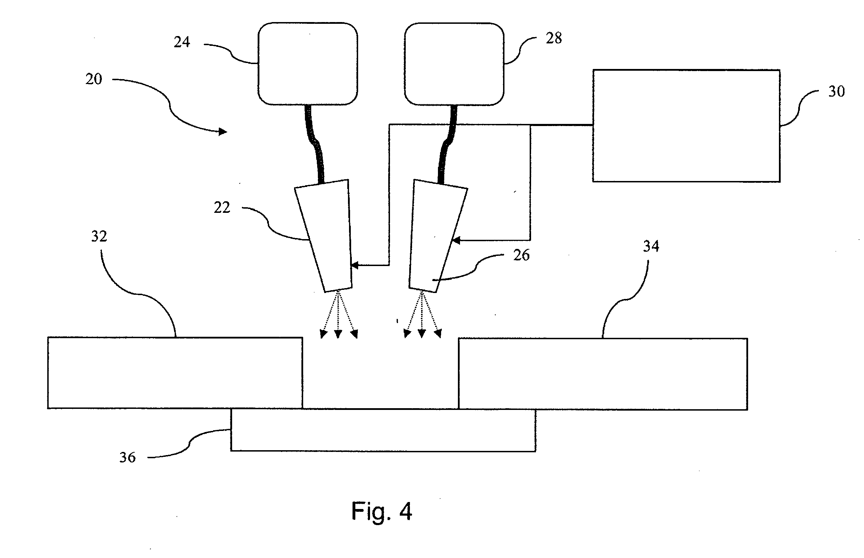

Fig. 4 shows in principle an ALM device 20 for manufacturing components from parts 32, 34. A first part 32 and a second part 34 are located on a working table so that a transition between both parts 32 and 34 can be produced with the ALM device 20. The ALM device 20 comprises a first powder feeder 22 supplied with powder of a first material of the first part 32 from a first material source 24, and a second powder feeder 26 supplied with powder of a second material of the second part 34 from a second material source 28. Both feeders 22 and 26 are controlled by means of an ALM control computer 30, which is programmed to control the production of the transition by means of ALM. A program executed by the control computer 30 performs the steps of the ALM method according to the invention and as described above. The typical steps are briefly outlined in the following with reference to the device 20: first, the control computer 30 starts the ALM process by controlling the first powder feeder 22 to produce a layer of the first material from source 24 in the transition between the first and the second part 32, 34. After producing a layer, computer 30 controls the second feeder 26 to produce a layer of the second material from source 28 over the first material layer. A layer of material is created by moving a powder feeder from the first to the second part or vice versa. During the movement, the amount of material supplied by the feeder is controlled by the computer in order to obtain a desired material composition. For example, supply of the first material is set to 70% when the first powder feeder 22 starts from the first part 32 for creating a layer of the first material and is reduced during the movement of the first feeder 22 to the second part 34 to a predefined amount, for example 30%. And supply of the second material is set to 70% when the second powder feeder 26 starts from the second part 34 and is reduced during the movement of the second feeder 26 to the first part 32 to a predefined amount, for example 30%, when creating a layer of second material. In such a way, the transition can be produced with a gradually changing material composition. After creating such a material composition, it is punctually heated for melting the first and second material powders and creating a cast. Instead of powder feeders also wire feeders for the first and second material can be applied.

The present invention allows to produce graded material transitions by means of ALM methods, with which typical problems of the manufacturing of space transportation components, particularly combustion chambers for thrusters, can be overcome: The integral manufacturing of components from parts according to the invention can be performed using essentially only one working step instead of numerous alternating welding and machining steps. The risk of material property degradation and flaw formation (porosity, hot cracking) during a welding process as applied with usual manufacturing methods can be decreased. Interface stresses caused by high local differences of material properties can be avoided.

### REFERENCE NUMERALS AND ACRONYMS

- 10, 11: orbital satellite thruster
- 12, 13: combustion chamber
- 14, 15: first part of the combustion chamber 12/13
- 16, 17: second middle part of the combustion chamber 12/13
- 18, 19: third part of the combustion chamber 12/13
- 20: ALM component manufacturing device
- 22: first powder feeder
- 24: first material source
- 26: second powder feeder
- 28: second material source
- 30: ALM control computer
- 32: first part
- 34: second part
- 36: work table

## Claims

1. A method for manufacturing of components (10; 11) from parts (12, 14, 16; 13, 15, 17) made from different materials, wherein
- a transition between one part (14; 15) made from a first material and another part (16; 17) made from a second material is produced by an additive layer manufacturing method, and wherein
- the additive layer manufacturing method comprises starting with the first material and then gradually changing the material composition to the second material.

2. The method of claim 1, wherein the additive layer manufacturing uses a powder bed, a powder feeding, or a wire feeding for making the transition between the one part (14; 15) to the another part (16; 17).

3. The method of claim 2, wherein the additive layer manufacturing method uses at least two individual powder feeders, wherein one powder feeder is provided for producing layers of the first material and another powder feeder is provided for producing layers of the second material.

4. The method of claim 3, wherein the powder feeders use a Laser or an Electron Beam as energy source.

5. The method of claim 2, 3 or 4, wherein the gradually changing of the material composition from the first material to the second material comprises
- starting with a deposition of the first material by means of a powder feeding of the first material,
- then gradually decreasing of the powder feeding of the first material and at the same time gradually increasing of a powder feeding of the second material, and
- ending with an isolated deposition layer of the second material.

6. The method of claim 2, 3 or 4, wherein the gradually changing of the material composition from the first material to the second material comprises
- starting with a deposition of the first material by means of a wire feeding of the first material,
- then gradually decreasing of the wire feeding of the first material and at the same time gradually increasing of a wire feeding of the second material, and
- ending with an isolated deposition layer of the second material.

7. The method of claim 2, 3 or 4, wherein the gradually changing of the material composition from the first material to the second material comprises
- creating a powder bed of a pre-mix of the first and the second material with a material composition gradually changing from the first to the second material, and
- selectively melting the entire created powder bed with a point heat source.

8. The method of any of the preceding claims being used for manufacturing of space transportation components, particularly combustion chambers for thrusters.

9. A device (20) for manufacturing of components from parts made from different materials comprising
- additive layer manufacturing means (22, 24, 26, 28, 30) provided for producing a transition between one part made from a first material and another part made from a second material, wherein the additive layer manufacturing means are provided to produce the transition with a gradually changing material composition starting with the first material to the second material.

10. The device of claim 9, wherein the additive layer manufacturing means comprise at least two individual powder feeders (22, 24, 26, 28), wherein one powder feeder (22) is provided for producing layers of the first material (24) and another powder feeder (26) is provided for producing layers of the second material (28).

11. The device of claim 10, wherein the powder feeders use a Laser or an Electron Beam as energy source.

12. The device of claim, 9, 10 or 11, wherein the additive layer manufacturing means are provided to produce the transition with a gradually changing material composition starting with the first material to the second material by performing the acts of
- starting with a deposition of the first material by means of a powder feeding of the first material,
- then gradually decreasing of the powder feeding of the first material and at the same time gradually increasing of a powder feeding of the second material, and
- ending with an isolated deposition layer of the second material.

13. The device of claim 9, 10 or 11, wherein the additive layer manufacturing means are provided to produce the transition with a gradually changing material composition starting with the first material to the second material by performing the acts of
- starting with a deposition of the first material by means of a wire feeding of the first material,
- then gradually decreasing of the wire feeding of the first material and at the same time gradually increasing of a wire feeding of the second material, and
- ending with an isolated deposition layer of the second material.

14. The device of claim 9, 10 or 11, wherein the additive layer manufacturing means are provided to produce the transition with a gradually changing material composition starting with the first material to the second material by performing the acts of
- creating a powder bed of a pre-mix of the first and the second material with a material composition gradually changing from the first to the second material, and
- selectively melting the entire created powder bed with a point heat source.

15. A space transportation component, particularly a combustion chamber for a thruster, being produced with a method and/or a device of any of the preceding claims and comprising two or more parts made from different materials, wherein each part has at least one transition to another part.
